# FASCICULE DE BREVET EUROPEEN

(11) **EP 3 648 362 B1**
(45) Date de publication et mention de la délivrance du brevet: **03.03.2021**
(21) Numéro de dépôt: 19204275.2
(22) Date de dépôt: 21.10.2019
(51) Int. Cl.: H04B 5/00, H02H 9/04, H02M 7/06, H02M 7/217

(54) **PROCÉDÉ DE LIMITATION DU NIVEAU DE TENSION ISSUE D'UN CHAMP MAGNÉTIQUE REÇU PAR UN TRANSPONDEUR ET TRANSPONDEUR CORRESPONDANT**
VERFAHREN ZUR BESCHRÄNKUNG DES ÜBER EINEN TRANSPONDER EMPFANGENEN SPANNUNGSNIVEAUS AUS EINEM MAGNETFELD, UND ENTSPRECHENDER TRANSPONDER
METHOD FOR LIMITING THE LEVEL OF VOLTAGE FROM A MAGNETIC FIELD RECEIVED BY A TRANSPONDER AND CORRESPONDING TRANSPONDER

(30) Priorité: 02.11.2018 FR 1860141
(43) Date de publication de la demande: 06.05.2020
(73) Titulaire: STMICROELECTRONICS SA, 92120 Montrouge (FR)
(72) Inventeur: GOULIER, Julien, 38000 GRENOBLE (FR)
(74) Mandataire: Casalonga

(56) Documents cités:
- EP-A1- 3 113 331
- WO-A1-2007/138690
- US-A1- 2011 287 714
- US-A1- 2014 036 395
- US-A1- 2016 119 033

## Description

Des modes de mise en œuvre et de réalisation de l'invention concernent la communication sans fil ou sans contact utilisant des dispositifs sans contact ou composants électroniques connectés à une antenne, notamment des dispositifs configurés pour échanger des informations avec un lecteur via ladite antenne selon un protocole de communication de type sans contact.

Des modes de mise en œuvre et de réalisation de l'invention concernent plus particulièrement la communication sans contact entre un dispositif sans contact et un lecteur à une fréquence de 13.56 MHz. Ces composants ou dispositifs sans contact peuvent être par exemple des composants ou dispositifs dits « NFC » c'est-à-dire des dispositifs compatibles avec la technologie NFC (« Near Field Communication »).

Le dispositif NFC peut être par exemple un circuit intégré ou une puce incorporant un microcontrôleur NFC.

L'acronyme NFC désigne une technologie de communication sans fil haute fréquence faible distance, qui permet des échanges de données entre deux dispositifs sans contact sur une faible distance par exemple 10 cm.

La technologie NFC est une plateforme technologique ouverte normalisée par exemple dans la norme ISO/IEC 18092, ISO/IEC 21481, ISO 14443 ou EMVCo.

Outre sa fonction classique de téléphone, un téléphone mobile cellulaire peut être utilisé (s'il est équipé de moyens spécifiques) pour échanger des informations avec un autre dispositif sans contact, par exemple un lecteur sans contact, en utilisant un protocole de communication sans contact utilisable dans la technologie NFC.

On peut également citer d'autres dispositifs sans contact comme une montre connectée.

Ceci permet d'échanger des informations entre le lecteur sans contact et des éléments sécurisés situés dans le téléphone mobile. De nombreuses applications sont ainsi possibles comme la billetterie mobile dans les transports publics (le téléphone mobile se comporte comme un ticket de transport) ou bien le paiement mobile (le téléphone mobile se comporte comme une carte de paiement).

Lors d'une transmission d'information entre un lecteur et une étiquette ou une carte sans contact ou un objet émulé en mode étiquette ou carte, le lecteur génère un champ magnétique par l'intermédiaire de son antenne qui est généralement dans les normes classiquement utilisées, une onde sinusoïdale à 13.56 MHz. La force du champ magnétique est par exemple comprise entre 0.5 et 7.5 ampères/mètre RMS (« Root Mean Square » en anglais). Plus le lecteur et l'étiquette ou carte sont éloignés, plus la force du champ magnétique est faible. A l'inverse, plus le lecteur et l'étiquette ou carte sont proches, plus la force du champ magnétique est importante.

Deux modes de fonctionnement sont alors possibles, un mode passif ou un mode actif.

Dans le mode passif, seul le lecteur génère un champ magnétique et l'objet, émulé en mode étiquette ou carte, est alors passif et joue toujours le rôle de la cible.

Plus précisément, l'antenne de l'objet émulant l'étiquette ou la carte module le champ généré par le lecteur.

Cette modification est effectuée en modifiant la charge connectée aux bornes de l'antenne de l'objet.

En modifiant la charge aux bornes de l'antenne de l'objet, l'impédance de sortie de l'antenne du lecteur change en raison du couplage magnétique entre les deux antennes. Il en résulte un changement dans les amplitudes et/ou les phases des tensions et courants présents au niveau des antennes du lecteur et de l'objet.

Et, de cette façon, les informations à transmettre depuis l'objet vers le lecteur sont transmises par modulation de charge aux courants d'antenne du lecteur.

Dans le mode de fonctionnement actif, l'objet peut par exemple réaliser une communication passive assistée par une source d'alimentation propre, par exemple une batterie, comme c'est le cas dans un téléphone mobile, pour améliorer la performance dudit objet.

Aussi, pour communiquer, l'objet et le lecteur peuvent chacun générer alternativement un champ magnétique. Dans ce cas, l'objet est émulé en mode lecteur lorsqu'il doit envoyer des données au lecteur qui fonctionne alors dans un mode récepteur. Ce mode actif de communication est connu par l'homme du métier sous le vocable anglo-saxon « peer to peer ».

Par rapport à un mode de communication passif, on obtient des distances de fonctionnement plus importantes qui peuvent aller jusqu'à 20 cm en fonction du protocole utilisé.

L'intensité du champ magnétique au niveau de la carte ou de l'étiquette dépend principalement du lecteur et de sa position par rapport à ladite carte/étiquette. Un champ magnétique élevé peut détériorer le circuit intégré de l'objet émulé en mode carte.

Il existe par conséquent un besoin de protéger le circuit intégré de l'objet émulé en mode carte en limitant la tension issue du champ magnétique émis par le lecteur

Le document EP3113331 A1 divulgue une carte sans contact comprenant un circuit de régulation de courant.

Le document US 2011/0287714 A1 divulgue un procédé de protection contre les surtensions dans un dispositif capable d'effectuer des communications de champ proche.

Le document US 2014/0036395 A1 divulgue un appareil de communication en champ proche muni d'un régulateur pour réguler une tension issue d'un signal RF couplé de manière inductive à un coupleur inductif.

Le document WO 2007/138690 A1 divulgue un dispositif électronique de type sans contact avec un circuit de contrôle de capacité.

Le document US 2016/0119033 A1 divulgue un procédé de gestion du fonctionnement d'un objet capable de communiquer sans contact avec un lecteur magnétiquement couplé audit objet, qui comprend en outre un ajustement d'impédance.

L'invention est définie par les revendications indépendantes 1 et 6. Les revendications dépendantes 2 à 5 et 7 à 13 spécifient des modes de mise en œuvre préférés.

Selon un aspect, il est proposé un procédé de limitation de la tension en entrée d'un circuit intégré d'un transpondeur communiquant sans contact avec un lecteur, ledit transpondeur comprenant en outre une antenne et un circuit redresseur comportant deux transistors couplés de façon croisée entre les bornes de l'antenne et une tension de référence, le procédé comprenant, lors de ladite communication, un contrôle des tensions de grille des transistors de façon à modifier l'impédance d'entrée du circuit intégré.

Le contrôle des tensions de grille des transistors permet de réduire l'impédance de l'antenne et donc l'impédance d'entrée du circuit intégré. La réduction de l'impédance de l'antenne permet de dissiper l'énergie excessive au niveau de l'antenne. Cette dissipation d'énergie permet de réduire la tension au niveau de l'antenne et conduit par conséquent à une limitation de la tension en entrée du circuit intégré.

Selon un mode de mise en œuvre revendiqué, la communication comporte une réception d'un signal de porteuse au niveau des bornes de l'antenne mettant alternativement et successivement en conduction les deux transistors et ledit contrôle des tensions de grille comporte, lorsque l'un des transistors est mis en conduction par le signal de porteuse, une configuration de l'autre transistor en source de courant.

Le signal de porteuse est reçu par les bornes de l'antenne. Le signal de porteuse caractérisé par une double alternance permet de mettre alternativement et successivement en conduction les deux transistors.

Par « transistor mis en conduction » on entend typiquement un transistor complètement passant c'est à dire équivalent à un court-circuit.

Selon un mode de mise en œuvre, la configuration d'un transistor en source de courant comprend une application d'une tension de contrôle sur la grille de ce transistor.

Les tensions de contrôle sur les grilles de transistors configurés en source de courant peuvent être identiques.

Cela étant, selon un mode de mise en œuvre, le contrôle des tensions de grille peut comporter des configurations successives des deux transistors en source de courant par application respective de deux tensions de contrôle différentes.

Les bornes de l'antenne pouvant être asymétriques, il est avantageux d'appliquer deux tensions de contrôle différentes aux deux transistors, c'est-à-dire, une première tension de contrôle au premier transistor et une deuxième tension de contrôle différente de la première tension de contrôle au deuxième transistor.

Les deux transistors peuvent être de type NMOS et la tension de référence est alors la masse.

Les deux transistors peuvent être de type PMOS et la tension de référence est alors une tension d'alimentation.

Selon un autre aspect, il est proposé un transpondeur configuré pour communiquer sans contact avec un lecteur. Le transpondeur comprend un circuit intégré, une antenne et un circuit redresseur comportant deux transistors couplés de façon croisée entre les bornes de l'antenne et une borne de référence destinée à recevoir une tension de référence, et des moyens de commande aptes à, lors d'une communication entre le lecteur et le transpondeur, contrôler les tensions de grille des transistors de façon à modifier l'impédance d'entrée du circuit intégré.

Selon un mode de réalisation revendiqué, les deux bornes de l'antenne sont destinées à recevoir, lors de ladite communication, un signal de porteuse mettant alternativement et successivement en conduction les deux transistors et les moyens de commande sont aptes à, lorsque l'un des transistors est mis en conduction par le signal de porteuse, configurer l'autre transistor en source de courant.

Selon un mode de réalisation, les moyens de commande sont aptes, pour configurer un transistor en source de courant, à appliquer une tension de contrôle sur la grille de ce transistor.

Selon un mode de réalisation, les moyens de commande sont aptes à configurer successivement les deux transistors en source de courant par application respective d'une première et d'une deuxième tension de contrôle différentes.

Selon un mode de réalisation, les moyens de commande comprennent deux condensateurs, les deux transistors étant couplés de façon croisée par l'intermédiaire de ces deux condensateurs, et deux transistors auxiliaires respectivement couplés entre les grilles des deux transistors et une borne délivrant la tension de contrôle.

Selon un mode de réalisation, les moyens de commande comprennent une première partie et une deuxième partie configurées pour générer ladite tension de contrôle, chaque partie comprenant deux diodes couplées à la masse par l'intermédiaire d'une résistance.

Selon un mode de réalisation, les deux transistors sont de type NMOS et la tension de référence est la masse.

Selon un mode de réalisation, les deux transistors sont de type PMOS et la tension de référence est une tension d'alimentation.

Selon un autre aspect, il est proposé un dispositif tel qu'une carte à puce ou un téléphone comportant ledit transpondeur.

D'autres avantages et caractéristiques de l'invention apparaîtront à la lecture de la description détaillée de modes de mise en œuvre et de réalisation, nullement limitatifs, et des dessins annexés sur lesquels :

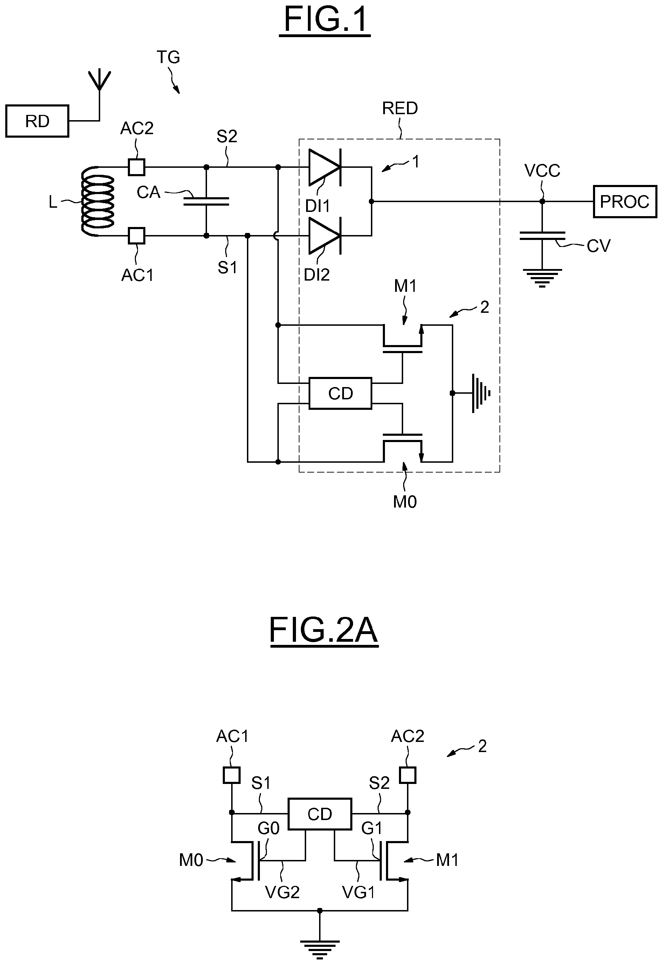

Les figures 1, 2A, 2B, 3A et 3B illustrent schématiquement différents modes de mise en œuvre et de réalisation de l'invention.

L'étendue de l'invention est déterminée par les revendications.

Sur la figure 1, la référence TG désigne un transpondeur qui peut par exemple communiquer avec un lecteur RD via une antenne, par exemple une bobine inductrice L.

Ladite antenne comprend deux bornes AC1 et AC2 couplées à un condensateur d'accord CA configuré pour ajuster la fréquence de résonance du transpondeur aux alentours de la fréquence du signal de porteuse. La fréquence du signal de porteuse est par exemple égale à 13,56 MHz.

La borne AC1 délivre un signal S1 et la borne AC2 délivre un signal S2. Les signaux S1 et S2 représentent le signal de porteuse.

Les deux bornes AC1 et AC2 alternent entre un état haut et un état bas.

Par « état haut » on entend par exemple une tension positive et par « état bas », par exemple une tension négative.

Le transpondeur TG comprend également un circuit redresseur RED configuré pour redresser les alternances négatives et conserver les alternances positives du signal de porteuse reçu S1, S2 au niveau des deux bornes AC1 et AC2.

Le circuit redresseur RED est couplé à un condensateur CV configuré pour conserver que la composante continue VCC du signal de porteuse. En d'autres termes, le signal de porteuse, initialement alternatif est converti en signal continu (ou tension continue) VCC.

Le transpondeur TG comprend également des moyens de traitement PROC couplés au condensateur CV. Les moyens de traitement PROC peuvent être par exemple un microprocesseur alimenté par ledit signal continu VCC et configuré pour traiter les données transmises par le lecteur RD.

Le circuit redresseur RED comprend une première partie 1 comportant une première diode DI1 couplée à la borne AC2 et configurée pour laisser passer le signal S2 lorsqu'il est dans un état haut. La première partie 1 comprend également une deuxième diode DI2 couplée à la borne AC1 et configurée pour laisser passer le signal S1 lorsqu'il est dans un état haut.

Le circuit redresseur RED comporte également une deuxième partie 2 comprenant deux transistors M0, M1 couplés de façon croisée, par l'intermédiaire de moyens de commande CD, entre les bornes AC1 et AC2 de l'antenne et une tension de référence.

Plus précisément, les moyens de commande CD sont couplés aux grilles des deux transistors M0, M1 et sont configurés pour contrôler les tensions de grille de chaque transistor.

Dans ce mode réalisation, les deux transistors M0, M1 sont de type NMOS et couplés à la tension de référence qui est ici la masse.

La figure 2A représente une vue détaillée de la deuxième partie 2 du circuit redresseur RED comprenant les deux transistors M0 et M1.

Lesdits moyens de commande CD sont couplés à la borne AC1 et sont configurés pour recevoir le signal S1. Ils sont également couplés à la borne AC2 et sont configurés pour recevoir le signal S2.

La grille G0 du transistor M0 et la grille G1 du transistor M1 sont couplées aux moyens de commande CD. Les moyens de commande CD sont configurés pour contrôler la grille G0 du transistor M0 par un signal de contrôle VG2.

Ils sont également configurés pour contrôler la grille G1 du transistor M1 par un signal de contrôle VG1.

Lorsque le signal S1 délivré par la borne AC1 est dans un état haut, les moyens de commande CD délivrent le signal de contrôle VG1 dans un état haut. Le transistor M1 est mis en conduction et relie par conséquent la borne AC2 à la masse.

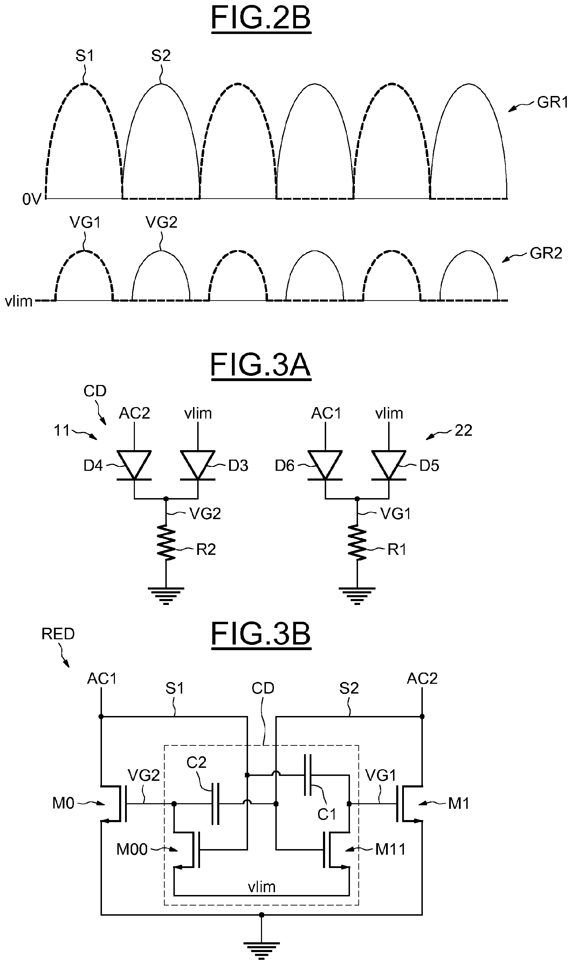

Simultanément, les moyens de commande CD délivrent le signal de contrôle VG2 de façon à configurer le transistor M0 en source de courant. Le signal de contrôle VG2 est une tension de contrôle vlim illustrée dans la figure 2B.

Ledit signal de contrôle VG2 permet de limiter la tension du signal S1 en faisant circuler le courant de la borne AC1 à la borne AC2 et par conséquent de réduire l'impédance au niveau de l'antenne.

Réduire l'impédance de l'antenne permet de dissiper l'énergie excessive au niveau de l'antenne et par conséquent réduire la tension au niveau de ladite antenne.

Lorsque le signal S2 délivré par la borne AC2 est dans un état haut, les moyens de commande CD délivrent le signal de contrôle VG2 dans un état haut. Le transistor M0 est mis en conduction et relie par conséquent la borne AC1 à la masse.

Simultanément, les moyens de commande CD délivrent le signal de contrôle VG1 (tension de contrôle vlim) de façon à configurer le transistor M1 en source de courant.

Ledit signal de contrôle VG1 permet de limiter la tension du signal S2 en faisant circuler le courant de la borne AC2 à la borne AC1 et réduire par conséquent l'impédance au niveau de l'antenne.

Il est à noter que les tensions de contrôle VG1 et VG2 peuvent être sensiblement égales ou différentes.

La figure 2B illustre un premier graphe GR1 montrant l'évolution de la tension S1 et S2 en fonction du temps.

La figure 2B illustre également un deuxième graphe GR2 montrant l'évolution des deux tensions VG1 et VG2 en fonction du temps une fois les grilles G0, G1 des deux transistors M0, M1 contrôlées par les moyens de commande CD.

Le premier graphe GR1 met en évidence la double alternance du signal de porteuse.

L'amplitude du signal S1 à l'état haut dans le premier graphe GR1 est due au contrôle de la grille G0 du transistor M0 par la tension de contrôle VG2 sensiblement égale à la tension de contrôle vlim.

L'amplitude du signal S2 à l'état haut dans le premier graphe GR1 est due au contrôle de la grille G1 du transistor M1 par la tension de contrôle VG1 sensiblement égale à la tension de contrôle vlim.

La figure 3A illustre un exemple de mode de réalisation des moyens de commande CD.

Les moyens de commande CD comprennent une première partie 11 configurée pour générer le signal de contrôle VG2 et une deuxième partie 22 configurée pour générer le signal de contrôle VG1.

La première partie 11 comprend une troisième diode D3 qui a son anode couplée à la borne délivrant ladite tension de contrôle vlim et une quatrième diode D4 qui a son anode couplée à la borne AC2.

Les cathodes de la troisième diode D3 et de la quatrième diode D4 sont couplées entre-elles et à la masse par une résistance R2.

Si la tension au niveau de la borne AC2 est supérieure à la tension de contrôle vlim, la tension du signal de contrôle VG2 sera sensiblement égale à la tension au niveau de la borne AC2.

Si la tension au niveau de la borne AC2 est inférieure à la tension de contrôle vlim, la tension du signal de contrôle VG2 sera sensiblement égale à la tension de contrôle vlim.

La deuxième partie 22 comprend une cinquième diode D5 qui a son anode couplée à la borne délivrant ladite tension de contrôle vlim et une sixième diode D6 qui a son anode couplée à la borne AC1.

Les cathodes de la cinquième diode D5 et de la sixième diode D6 sont couplées entre-elles et à la masse par une résistance R1.

Si la tension au niveau de la borne AC1 est supérieure à la tension de contrôle vlim, la tension du signal de contrôle VG1 sera sensiblement égale à la tension au niveau de la borne AC1.

Si la tension au niveau de la borne AC1 est inférieure à la tension de contrôle vlim, la tension du signal de contrôle VG1 sera sensiblement égale à la tension de contrôle vlim.

La figure 3B illustre un autre mode de réalisation des moyens de commande CD.

Les moyens de commande CD comprennent un premier condensateur C1, un deuxième condensateur C2, un premier transistor auxiliaire M00 et un deuxième transistor auxiliaire M11 de type NMOS.

La borne AC1 est couplée au premier condensateur C1 et à la grille du premier transistor auxiliaire M00.

La borne AC2 est couplée au deuxième condensateur C2 et à la grille du deuxième transistor auxiliaire M11.

Le premier condensateur C1 est également couplé à la grille du deuxième transistor M1 et à la grille du premier transistor auxiliaire M00.

Le deuxième condensateur C2 est couplé à la grille du premier transistor M0 et à la grille du deuxième transistor auxiliaire M11.

Une première électrode de conduction (le drain) du premier transistor auxiliaire M00 est couplée à une électrode du deuxième condensateur C2, sa deuxième électrode de conduction (source) étant couplée à la borne délivrant la tension de contrôle vlim.

Une première électrode de conduction (le drain) du deuxième transistor auxiliaire M11 est couplée à une électrode du premier condensateur C1, sa deuxième électrode de conduction (source) étant couplée à la borne délivrant la tension de contrôle vlim.

Le fonctionnement desdits moyens de commande est le suivant : si le signal S1 délivré par la borne AC1 est à l'état haut, le premier condensateur C1 se charge. La tension équivalente VG1 au niveau du premier condensateur est sensiblement égale à la tension du signal S1 et donc du signal de porteuse.

Le deuxième transistor M1 est mis en conduction. La borne AC2 est reliée à la masse.

Le premier transistor auxiliaire M00 est également mis en conduction et laisse circuler les charges emmagasinées dans le deuxième condensateur C2 correspondant à la tension de contrôle VG2. La tension de contrôle VG2 est sensiblement égale à la tension de contrôle vlim.

Le premier transistor M0 est configuré en source de courant et contrôlé par ladite tension de contrôle VG2 qui permet de limiter la tension du signal S1 et donc du signal de porteuse.

Une fois le signal S2 à l'état haut, le premier transistor M0 est mis en conduction. La borne AC1 est reliée à la masse.

Le deuxième transistor auxiliaire M11 est également mis en conduction et laisse circuler les charges emmagasinées dans le premier condensateur C1 correspondant à la tension de contrôle VG1. La tension de contrôle VG1 est sensiblement égale à la tension de contrôle vlim.

Le deuxième transistor M1 est configuré en source de courant et contrôlé par ladite tension de contrôle VG1 qui permet de limiter la tension du signal S2 et donc du signal de porteuse.

L'invention permet ainsi de réduire avantageusement la tension aux bornes de l'antenne et donc en entrée du circuit intégré en utilisant les deux transistors du redresseur lorsque ceux-ci ne sont pas passants.

Ainsi, en l'absence de tension vlim, la tension maximale aux bornes de l'antenne serait par exemple de 28 Volts pour une excitation magnétique de 1,5A/m.

Avec l'invention, la tension maximale aux bornes de l'antenne serait par exemple de 6,4 Volts avec une tension vlim égale à 0.8 Volt, et elle serait réduite par exemple à 3,1 Volts avec une tension vlim égale à 0,9 Volt.

L'invention n'est pas limitée aux modes de réalisation qui viennent d'être décrits Son étendue est limitée par les revendications.

Ainsi, alors que les différents transistors décrits sont des transistors MOS, il serait possible d'utiliser des transistors PMOS, la tension de référence étant alors la tension d'alimentation au lieu d'être la masse.

## Revendications

1. Procédé de limitation de la tension en entrée d'un circuit intégré d'un transpondeur (TG) communiquant sans contact avec un lecteur (RD), ledit transpondeur (TG) comprenant en outre une antenne et un circuit redresseur (RED) comportant deux transistors (M0, M1) couplés de façon croisée entre les bornes (AC1, AC2) de l'antenne et une tension de référence, le procédé comprenant, lors de ladite communication, un contrôle des tensions de grille des transistors (M0, M1) de façon à modifier l'impédance d'entrée du circuit intégré, et dans lequel ladite communication comporte une réception d'un signal de porteuse au niveau des bornes (AC1, AC2) de l'antenne mettant alternativement et successivement en conduction les deux transistors (M0, M1) et **caractérisé en ce que**
ledit contrôle des tensions de grille comporte, lorsque l'un des transistors est mis en conduction par le signal de porteuse (S1, S2), une configuration de l'autre transistor en source de courant.

2. Procédé selon la revendication 1, dans lequel la configuration d'un transistor en source de courant comprend une application d'une tension de contrôle (VG1, VG2) sur la grille de ce transistor.

3. Procédé selon la revendication 2, dans lequel le contrôle des tensions de grille comporte des configurations successives des deux transistors (M0, M1) en source de courant par application respective de deux tensions de contrôle différentes (VG1, VG2).

4. Procédé selon l'une des revendications précédentes dans lequel les deux transistors (M0, M1) sont de type NMOS et la tension de référence est la masse.

5. Procédé selon l'une des revendications 1 à 3, dans lequel les deux transistors (M0, M1) sont de type PMOS et la tension de référence est une tension d'alimentation.

6. Transpondeur (TG), configuré pour communiquer sans contact avec un lecteur (RD), comprenant un circuit intégré, une antenne et un circuit redresseur (RED) comportant deux transistors (M0, M1) couplés de façon croisée entre les bornes (AC1, AC2) de l'antenne et une borne de référence destinée à recevoir une tension de référence, et des moyens de commande (CD) aptes à, lors d'une communication entre le lecteur (RD) et le transpondeur (TG), contrôler les tensions de grille des transistors (M0, M1) de façon à modifier l'impédance d'entrée du circuit intégré, et dans lequel les deux bornes (AC1, AC2) de l'antenne sont destinées à recevoir, lors de ladite communication, un signal de porteuse (S1, S2) mettant alternativement et successivement en conduction les deux transistors (M0, M1) et **caractérisé en ce que**
les moyens de commande (CD) sont aptes à, lorsque l'un des transistors (M0, M1) est mis en conduction par le signal de porteuse (S1, S2), configurer l'autre transistor en source de courant.

7. Transpondeur selon la revendication 6, dans lequel les moyens de commande (CD) sont aptes, pour configurer un transistor en source de courant, à appliquer une tension de contrôle (vlim) sur la grille de ce transistor.

8. Transpondeur selon la revendication 7, dans lequel les moyens de commande (CD) sont aptes à configurer successivement les deux transistors (M0, M1) en source de courant par application respectives de deux tensions de contrôle différentes.

9. Transpondeur selon l'une des revendications 7 ou 8, dans lequel les moyens de commande (CD) comprennent deux condensateurs (C1, C2), les deux transistors (M0, M1) étant couplés de façon croisée par l'intermédiaire des deux condensateurs, et deux transistors auxiliaires (M00, M11) respectivement couplés entre les grilles des deux transistors (M0, M1) et une borne délivrant la tension de contrôle (vlim).

10. Transpondeur selon l'une des revendications 7 ou 8, dans lequel les moyens de commande (CD) comprennent une première partie (11) et une deuxième partie (22) configurées pour générer ladite tension de contrôle (vlim), chaque partie comprenant deux diodes couplées à la masse par l'intermédiaire d'une résistance (R1, R2).

11. Transpondeur selon l'une des revendications 6 à 10, dans lequel les deux transistors (M0, M1) sont de type NMOS et la tension de référence est la masse.

12. Transpondeur selon l'une des revendications 6 à 10, dans lequel les deux transistors (M0, M1) sont de type PMOS et la tension de référence est une tension d'alimentation.

13. Dispositif tel qu'une carte à puce ou un téléphone comportant un transpondeur (TG) selon l'une des revendications 6 à 12.

## Patentansprüche

1. Verfahren zum Begrenzen der Spannung am Eingang einer integrierten Schaltung eines Transponders (TG), der kontaktlos mit einem Lesegerät (RD) kommuniziert, wobei der Transponder (TG) weiter eine Antenne und eine Gleichrichterschaltung (RED) umfasst, die zwei kreuzverschaltete Transistoren (M0, M1) zwischen den Anschlüssen (AC1, AC2) der Antenne und eine Referenzspannung umfasst, wobei das Verfahren bei der Kommunikation ein Steuern der Gatespannungen der Transistoren (M0, M1) umfasst, um die Eingangsimpedanz der integrierten Schaltung zu modifizieren, und wobei die Kommunikation ein Empfangen eines Trägersignals an den Anschlüssen (AC1, AC2) der Antenne umfasst, das die zwei Transistoren (M0, M1) abwechselnd und nacheinander durchschaltet, und **dadurch gekennzeichnet, dass** das Steuern der Gatespannungen, wenn einer der Transistoren vom Trägersignal (S1, S2) durchgeschaltet wird, ein Konfigurieren des anderen Transistors als Stromquelle umfasst.

2. Verfahren nach Anspruch 1, wobei das Konfigurieren eines Transistors als Stromquelle ein Anlegen einer Steuerspannung (VG1, VG2) an das Gate dieses Transistors umfasst.

3. Verfahren nach Anspruch 2, wobei das Steuern der Gatespannungen aufeinanderfolgende Konfigurationen der zwei Transistoren (M0, M1) als Stromquelle durch jeweiliges Anlegen von zwei verschiedenen Steuerspannungen (VG1, VG2) umfasst.

4. Verfahren nach einem der vorstehenden Ansprüche, wobei die zwei Transistoren (M0, M1) vom Typ NMOS sind, und es sich bei der Referenzspannung um die Masse handelt.

5. Verfahren nach einem der Ansprüche 1 bis 3, wobei die zwei Transistoren (M0, M1) vom Typ PMOS sind, und es sich bei der Referenzspannung um eine Speisespannung handelt.

6. Transponder (TG), der so konfiguriert ist, dass er kontaktlos mit einem Lesegerät (RD) kommuniziert, der eine integrierte Schaltung, eine Antenne und eine Gleichrichterschaltung (RED), die zwei kreuzverschaltete Transistoren (M0, M1) zwischen den Anschlüssen (AC1, AC2) der Antenne und einen Referenzanschluss umfasst, welcher dazu bestimmt ist, eine Referenzspannung zu empfangen, und Steuermittel (CD) umfasst, die bei einer Kommunikation zwischen dem Lesegerät (RD) und dem Transponder (TG) die Gatespannungen der Transistoren (M0, M1) steuern können, um die Eingangsimpedanz der integrierten Schaltung zu modifizieren, und wobei die zwei Anschlüsse (AC1, AC2) der Antenne dazu bestimmt sind, bei der Kommunikation ein Trägersignal (S1, S2) zu empfangen, das die zwei Transistoren (M0, M1) abwechselnd und nacheinander durchschaltet, und **dadurch gekennzeichnet, dass** die Steuermittel (CD), wenn einer der Transistoren (M0, Ml) vom Trägersignal (S1, S2) durchgeschaltet wird, den anderen Transistor als Stromquelle konfigurieren können.

7. Transponder nach Anspruch 6, wobei die Steuermittel (CD), um einen Transistor als Stromquelle zu konfigurieren, eine Steuerspannung (vlim) an das Gate dieses Transistors anlegen können.

8. Transponder nach Anspruch 7, wobei die Steuermittel (CD) durch jeweiliges Anlegen zweier verschiedener Steuerspannungen die zwei Transistoren (M0, M1) nacheinander als Stromquelle konfigurieren können.

9. Transponder nach einem der Ansprüche 7 oder 8, wobei die Steuermittel (CD) zwei Kondensatoren (C1, C2) umfassen, wobei die zwei Transistoren (M0, M1) mittels der zwei Kondensatoren kreuzverschaltete sind, und zwei Hilfstransistoren (M00, M11), die jeweils zwischen die Gates der zwei Transistoren (M0, M1) und einen Anschluss geschaltet sind, der die Steuerspannung (vlim) liefert.

10. Transponder nach einem der Ansprüche 7 oder 8, wobei die Steuermittel (CD) einen ersten Teil (11) und einen zweiten Teil (22) umfassen, die so konfiguriert sind, dass sie die Steuerspannung (vlim) erzeugen, wobei jeder Teil zwei Dioden umfasst, die mittels eines Widerstands (R1, R2) an die Masse geschaltet sind.

11. Transponder nach einem der Ansprüche 6 bis 10, wobei die zwei Transistoren (M0, M1) vom Typ NMOS sind, und es sich bei der Referenzspannung um die Masse handelt.

12. Transponder nach einem der Ansprüche 6 bis 10, wobei die zwei Transistoren (M0, M1) vom Typ PMOS sind, und es sich bei der Referenzspannung um eine Speisespannung handelt.

13. Vorrichtung, wie etwa eine Chipkarte oder ein Telefon, das einen Transponder (TG) nach einem der Ansprüche 6 bis 12 umfasst.

## Claims

1. Method for limiting the voltage at the input of an integrated circuit of a transponder (TG) communicating without contact with a reader (RD), said transponder (TG) further comprising an antenna and a rectifier circuit (RED) including two transistors (M0, M1) cross-coupled between the terminals (AC1, AC2) of the antenna and a reference voltage, the method comprising, during said communication, a control of the gate voltages of the transistors (M0, M1) in such a way as to modify the input impedance of the integrated circuit, and wherein said communication includes a reception of a carrier signal at the terminals (AC1, AC2) of the antenna alternatingly and successively placing the two transistors (M0, M1) in conduction and **characterised in that** said control of the gate voltages includes, when one of the transistors is placed in conduction by the carrier signal (S1, S2), a configuration of the other transistor as a source of current.

2. Method according to claim 1, wherein the configuration of a transistor as a source of current comprises an application of a control voltage (VG1, VG2) onto the gate of this transistor.

3. Method according to claim 2, wherein the control of the gate voltages includes successive configurations of the two transistors (M0, M1) as a source of current by respective application of two different control voltages (VG1, VG2).

4. Method according to one of the previous claims, wherein the two transistors (M0, M1) are of the NMOS type and the reference voltage is the ground.

5. Method according to one of claims 1 to 3, wherein the two transistors (M0, M1) are of the PMOS type and the reference voltage is a power supply voltage.

6. Transponder (TG), configured to communicate without contact with a reader (RD), comprising an integrated circuit, an antenna and a rectifier circuit (RED) including two transistors (M0, M1) cross-coupled between the terminals (AC1, AC2) of the antenna and a reference terminal intended to receive a reference voltage, and control means (CD) capable, during communication between the reader (RD) and the transponder (TG), of controlling the gate voltages of the transistors (M0, M1) in such a way as to modify the input impedance of the integrated circuit, and wherein the two terminals (AC1, AC2) of the antenna are intended to receive, during said communication, a carrier signal (S1, S2) alternatingly and successively placing the two transistors (M0, M1) in conduction and **characterised in that** the control means (CD) are capable, when one of the transistors (M0, M1) is placed in conduction by the carrier signal (S1, S2), of configuring the other transistor as a source of current.

7. Transponder according to claim 6, wherein the control means (CD) are capable, to configure a transistor as a source of current, of applying a control voltage (vlim) onto the gate of this transistor.

8. Transponder according to claim 7, wherein the control means (CD) are capable of successively configuring the two transistors (M0, M1) as a source of current by respectively applying two different control voltages.

9. Transponder according to one of claims 7 or 8, wherein the control means (CD) comprise two capacitors (C1, C2), the two transistors (M0, M1) being cross-coupled via the two capacitors, and two auxiliary transistors (M00, M11) respectively coupled between the gates of the two transistors (M0, M1) and a terminal delivering the control voltage (vlim).

10. Transponder according to one of claims 7 or 8, wherein the control means (CD) comprise a first part (11) and a second part (22) configured to generate said control voltage (vlim), each part comprising two diodes coupled to the ground via a resistor (R1, R2).

11. Transponder according to one of claims 6 to 10, wherein the two transistors (M0, M1) are of the NMOS type and the reference voltage is the ground.

12. Transponder according to one of claims 6 to 10, wherein the two transistors (M0, M1) are of the PMOS type and the reference voltage is a power supply voltage.

13. Device such as an integrated circuit card or a telephone including a transponder (TG) according to one of claims 6 to 12.
